# DEMANDE DE BREVET EUROPEEN

(11) **EP 4 560 937 A1**
(43) Date de publication de la demande: **28.05.2025**
(21) Numéro de dépôt: 24214917.7
(22) Date de dépôt: 22.11.2024
(51) Int. Cl.: H04B 10/116

(54) **PROCÉDÉ ET DISPOSITIF DE DÉMODULATION DE DONNÉES MODULÉES PAR MODULATION D' AMPLITUDE D'UN SIGNAL LUMINEUX ÉMIS PAR UNE SOURCE LUMINEUSE D'UN DISPOSITIF ÉMETTEUR**

(30) Priorité: 24.11.2023 FR 2312985
(71) Demandeur: SCHNEIDER ELECTRIC INDUSTRIES SAS, 92500 Rueil-Malmaison (FR)
(72) Inventeur: JIANG, Lei, 38400 SAINT MARTIN D'HERES (FR); HERMITTE, Fabien, 38240 MEYLAN (FR); DREINA, Emmanuel, 38240 MEYLAN (FR); LOVATO, Jean-Louis, 38330 BIVIERS (FR)
(74) Mandataire: Lavoix

(57) **Abrégé**

Ce dispositif de démodulation acquiert une image numérique comportant une zone éclairée par un signal lumineux émis par une source. Il est configuré pour :
- calculer (24) et mémoriser une valeur moyenne par colonne de ladite image numérique, en association avec un indice de colonne, rangées entre un premier et un deuxième indice de bord de l'image ;
- déterminer (26) une valeur maximale desdites valeurs moyennes, et calculer un seuil à partir de ladite valeur maximale,
- déterminer (28) un premier indice de colonne correspondant à la première valeur moyenne supérieure ou égale audit seuil en partant du premier indice de bord, et un deuxième indice de colonne correspondant à la première valeur moyenne supérieure ou égale audit seuil en partant du deuxième indice de bord ;
- démoduler (30, 32) des données binaires à partir des valeurs moyennes entre le premier indice de colonne et le deuxième indice de colonne.

## Description

L'invention concerne un procédé de démodulation de données modulées par modulation d'amplitude d'un signal lumineux émis par une source lumineuse d'un dispositif émetteur. Elle concerne également un dispositif de démodulation associé et un appareil électronique associé.

L'invention se situe dans le domaine de la technologie de communication sans fil utilisant la lumière visible, utilisant un système VLC (pour « Visible Light Communication »).

Elle s'applique en particulier dans le cadre de la communication de données en utilisant un codeur/émetteur mis en oeuvre sur des produits industriels comportant en façade un indicateur lumineux à diodes électroluminescentes (LED), e.g. un écran ou un ou plusieurs voyants lumineux, destiné(s) à fournir des indications sur un état du produit, les données étant décodables par un récepteur/décodeur VLC, intégré par exemple dans un dispositif portable, par exemple un téléphone portable.

Par exemple, l'invention s'applique pour des produits de surveillance et de protection de systèmes électriques, mais s'applique plus généralement avec tout type de produit comportant un indicateur lumineux en façade.

L'utilisation de la technologie de communication sans fil au moyen de la lumière visible, également appelée VLC, s'est développée récemment et a trouvé de nombreuses applications.

Un système de communication par lumière visible VLC comporte un dispositif codeur/émetteur et un dispositif récepteur/décodeur, positionnés sensiblement en vis-à-vis. Le dispositif codeur/émetteur comporte une source lumineuse, par exemple une ou plusieurs lampes à diode électroluminescente ou LED (pour « Light-Emitting Diode », et le dispositif récepteur/décodeur comporte un appareil de capture d'images, e.g. une caméra CMOS.

La source lumineuse émet un signal lumineux qui est modulé en amplitude en fonction de données à transmettre, les données étant codées en symboles par un procédé de codage, chaque symbole étant représentatif d'un bit à moduler. Les symboles sont ensuite encapsulés dans des paquets de transmission formatés, pour former un train binaire comportant un mot de synchronisation (ou séquence de synchronisation) prédéterminé, suivi d'un paquet de transmission formaté comportant un en-tête, des données utiles et un code détecteur d'erreur. Ce train binaire est transformé en signal électrique qui commande une activation ou désactivation de la source lumineuse, à une fréquence choisie de manière à ce que le scintillement provoqué soit imperceptible pour l'oeil humain. Par exemple lorsque la source lumineuse est allumée (état haut du signal lumineux correspondant), un '1' binaire est transmis, et lorsque la source lumineuse est éteinte (état bas du signal lumineux correspondant), un '0' binaire est transmis. Une autre correspondance entre états haut et bas et bits transmis pourrait être mise en place, sans changer le principe de la méthode.

Le dispositif récepteur/décodeur applique un traitement d'images numériques sur les images acquises par l'appareil de capture d'images pour effectuer une démodulation des données modulées, puis un décodage pour obtenir des données décodées.

Les images numériques acquises comportent des matrices de pixels dont les valeurs sont représentatives, dans une zone éclairée par la source lumineuse, de l'état haut ou bas de la source lumineuse, ou d'une transition entre ces états. Ainsi, une image numérique acquise comporte une zone comportant des franges claires et sombres, correspondant respectivement aux états haut et bas du signal lumineux.

Les systèmes connus sont particulièrement adaptés pour la communication VLC avec des émetteurs comportant des sources lumineuses puissantes et de surface importante.

Dans le cadre d'une application telle que mentionnée ci-dessus, les produits intégrant des indicateurs lumineux ou écrans mentionnés sont de relativement petite taille, et les sources lumineuses sont également de petite taille, par exemple entre 2mm et 6cm. Lorsqu'on envisage la transmission de données par une communication VLC à partir d'un tel produit, pour une lecture des données par appareil électronique portable, par exemple un téléphone mobile de type téléphone intelligent (ou « smartphone »), une tablette électronique ou un ordinateur portable, la zone de l'image acquise représentative de la source lumineuse occupe une surface variable, et diminuant avec la distance entre le capteur d'images et le produit considéré.

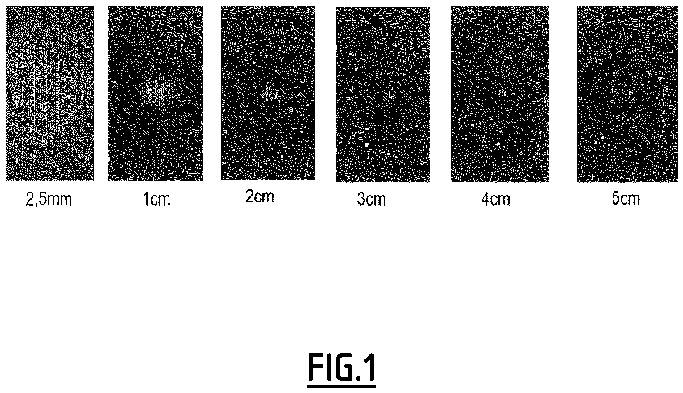

La figure 1 illustre à titre d'exemple des images d'une source lumineuse de type LED de diamètre de 2,5mm captées à des distances différentes, allant de 2,5mm à 5cm, et on peut observer que dans l'image captée à 2,5mm on observe des franges verticales correspondant aux états haut et bas de la source lumineuse correspondant aux valeurs de modulation, et que plus la distance entre le capteur d'images et la source lumineuse augmente, plus la zone correspondante diminue dans l'image captée, se retrouvant réduite à une zone quasiment ponctuelle sur un fond d'image sombre, potentiellement bruité. Ainsi, la quantité de bruit de fond augmente avec la distance, alors que l'intensité lumineuse de la zone correspondante diminue avec la distance, ce qui risque d'introduire des erreurs dans la démodulation et le décodage des données.

Il existe donc un besoin d'améliorer la démodulation de données modulées par modulation d'amplitude d'un signal lumineux émis par une source lumineuse.

A cet effet, l'invention propose un procédé de démodulation de données modulées par modulation d'amplitude d'un signal lumineux émis par une source lumineuse d'un dispositif émetteur, le procédé étant comportant une acquisition d'une image numérique comportant une zone éclairée par ledit signal lumineux, ladite zone comportant des franges correspondant à des états haut et bas du signal lumineux. Ce procédé comporte en outre des étapes de :
- calcul d'une valeur moyenne par colonne de ladite image numérique, et mémorisation des valeurs moyennes par colonne en association avec un indice de colonne, rangées entre un premier indice de bord correspondant à un premier bord de ladite image et un deuxième indice de bord correspondant à un deuxième bord de ladite image ;
- détermination d'une valeur maximale desdites valeurs moyennes, et calcul d'un seuil à partir de ladite valeur maximale,
- détermination d'un premier indice de colonne correspondant à la première valeur moyenne supérieure ou égale audit seuil en partant du premier indice de bord, et d'un deuxième indice de colonne correspondant à la première valeur moyenne supérieure ou égale audit seuil en partant du deuxième indice de bord ;
- extraction d'un sous-ensemble de valeurs moyennes entre le premier indice de colonne et le deuxième indice de colonne ;
- démodulation de données binaires à partir dudit sous-ensemble de valeurs moyennes.

Avantageusement, le procédé proposé permet une adaptation dynamique, sans connaissance préalable, pour extraire et traiter une zone d'image correspondant à la source lumineuse. Ainsi, avantageusement, cela permet d'améliorer la démodulation et le décodage tout en ayant une marge de positionnement du capteur d'images du dispositif récepteur par rapport à la source lumineuse.

Le procédé de démodulation de données modulées par modulation d'amplitude d'un signal lumineux selon l'invention peut présenter une ou plusieurs des caractéristiques ci-dessous, prises indépendamment ou selon toutes les combinaisons acceptables.

Le seuil est un pourcentage de ladite valeur maximale, de préférence compris entre 30% et 50%.

Le seuil est égal à 40% de ladite valeur maximale.

Dans l'étape de mémorisation, les valeurs moyennes par colonne sont mémorisées dans un tableau ou dans une liste ordonnée en fonction des indices de colonne.

L'étape de démodulation de données binaires comporte un calcul d'une courbe de seuillage par une méthode de segmentation.

Selon un autre aspect, l'invention concerne un dispositif de démodulation de données modulées par modulation d'amplitude d'un signal lumineux données modulées par modulation d'amplitude d'un signal lumineux émis par une source lumineuse d'un dispositif émetteur, le dispositif de démodulation étant configuré pour acquérir une image numérique comportant une zone éclairée par ledit signal lumineux, ladite zone comportant des franges correspondant à des états haut et bas du signal lumineux. Ce dispositif comporte en outre des modules configurés pour :
- calculer une valeur moyenne par colonne de ladite image numérique, et mémoriser des valeurs moyennes par colonne en association avec un indice de colonne, rangées entre un premier indice de bord correspondant à un premier bord de ladite image et un deuxième indice de bord correspondant à un deuxième bord de ladite image ;
- déterminer une valeur maximale desdites valeurs moyennes, et calculer un seuil à partir de ladite valeur maximale,
- déterminer un premier indice de colonne correspondant à la première valeur moyenne supérieure ou égale audit seuil en partant du premier indice de bord, et un deuxième indice de colonne correspondant à la première valeur moyenne supérieure ou égale audit seuil en partant du deuxième indice de bord ;
- extraire un sous-ensemble de valeurs moyennes entre le premier indice de colonne et le deuxième indice de colonne ;
- démoduler des données binaires à partir dudit sous-ensemble de valeurs moyennes.

Dans un mode de réalisation, le seuil est un pourcentage de ladite valeur maximale, de préférence compris entre 30% et 50%.

Selon un autre aspect, l'invention concerne un appareil électronique comportant un capteur d'images et un dispositif de démodulation tel que brièvement décrit ci-dessus.

Selon une caractéristique particulière, l'appareil électronique est un téléphone mobile ou une tablette électronique.

D'autres caractéristiques et avantages de l'invention ressortiront de la description qui en est donnée ci-dessous, à titre indicatif et nullement limitatif, en référence aux figures annexées, parmi lesquelles :
- la figure 1, déjà décrite, illustre une pluralité d'images d'une même source lumineuse captées à des distances croissantes ;
- la figure 2 est une représentation schématique d'un émetteur et d'un récepteur d'un système de communication VLC;
- la figure 3 est un synoptique des principales étapes d'un procédé de démodulation selon l'invention ;
- la figure 4 illustre des exemples de signaux à une dimension correspondant à des valeurs moyennes par colonne d'une image numérique acquise par un récepteur.

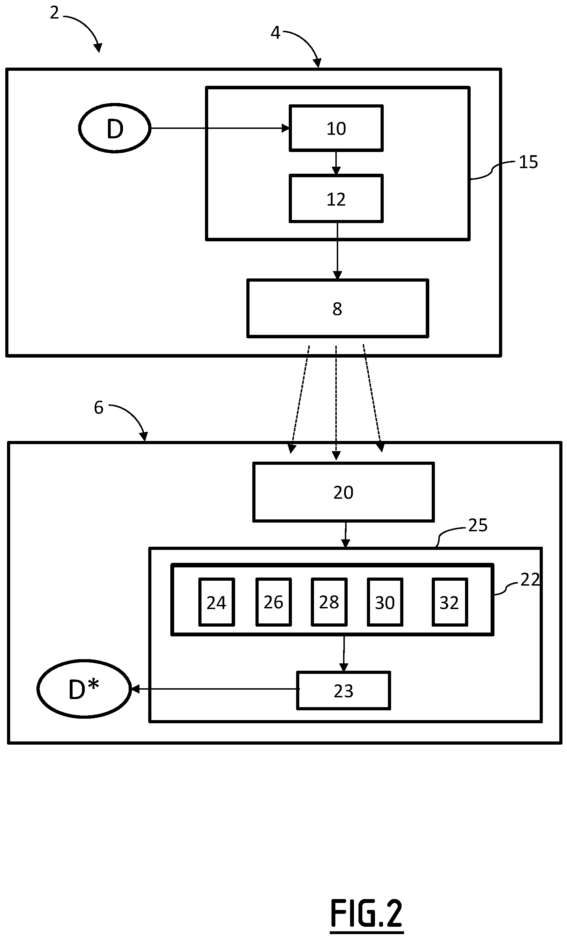

La figure 2 illustre un système 2 de communication VLC, comportant un dispositif émetteur 4 en communication unidirectionnelle avec un dispositif récepteur 6.

Le dispositif émetteur 4, également appelé simplement émetteur, est configuré pour coder, moduler et transmettre des données numériques D en utilisant une modulation d'amplitude d'un signal lumineux émis par une source lumineuse 8, par exemple formée d'une ou plusieurs lampes, adaptées pour émettre des ondes de longueur d'onde dans le spectre visible, la longueur d'onde étant comprise entre 380nm et 780nm.

L'émetteur 4 comporte un module de codage 10 et un module de modulation 12, qui commande l'amplitude d'un signal lumineux émis par la source de lumière 8.

Le module de codage 10 met en oeuvre par exemple un codage qui consiste à transformer des bits en mots de code, également appelés symboles. Dans le système VLC 2, le module de codage 10 met en oeuvre le codage Manchester, et un formatage sous forme de paquets de transmission formatés selon un protocole choisi.

Le codage Manchester, selon la norme IEEE 802.3, consiste à coder un « 1 » par « 01 » et un « 0 » par « 10 ».

Les symboles sont ensuite encapsulés dans des paquets de transmission formatés, pour former un train binaire comportant un mot de synchronisation prédéterminé, suivi d'un paquet de transmission formaté comportant un en-tête, des données utiles et un code détecteur d'erreur.

Par exemple, lorsque le codage Manchester est utilisé, le mot de synchronisation est le motif `1111' car par définition, ce motif ne fait pas partie du code Manchester. En d'autres termes, aucune série de symboles du code de Manchester ne forme une suite de quatre '1'.

La taille des paquets est variable, en fonction de l'application visée. Elle est indiquée dans l'en-tête des paquets.

Le code détecteur d'erreur est par exemple un code de contrôle de redondance cyclique (en anglais « cyclic redundancy check ») tel que CRC8 ou CRC16.

Le module de modulation 12 met en oeuvre une modulation de type « tout ou rien » ou modulation OOK (de l'anglais « On-Off Keying »). Dans ce type de modulation, le signal lumineux émis par la source lumineuse est à l'état haut (i.e. source lumineuse allumée) pour transmettre un '1' binaire ou à l'état bas (i.e. source lumineuse éteinte) pour transmettre un '0', avec une fréquence suffisamment élevée pour éviter que le scintillement soit visible par l'oeil humain.

Dans un mode de réalisation, le module de codage 10 et le module de modulation 12 sont mis en oeuvre par un processeur de calcul 15. Par exemple, le processeur mis en oeuvre par le dispositif émetteur 4.

En variante, chacun des modules de codage 10 et de modulation 12 est un module dédié réalisé sous forme d'un composant logique programmable tel qu'un FPGA (de l'anglais *Field Programmable Gate Array*), ou encore sous forme d'un circuit intégré dédié, tel qu'un ASIC (de l'anglais *Application Spécifie Integrated Circuit*).

Par exemple, le dispositif émetteur 4 est intégré dans un produit industriel et la source de lumière 8 comporte une ou plusieurs lampes LED, formant un indicateur lumineux initialement destinée à une signalisation d'un état de fonctionnement du produit industriel. La source de lumière est de préférence intégrée de manière à éclairer une portion d'une face du produit industriel, visible par un utilisateur lorsque le produit industriel est en position de fonctionnement, par exemple lorsque le produit industriel est fixé sur un support, la portion éclairée est située sur la face avant du produit.

La modulation du signal lumineux émis est indiscernable à l'œil nu. Avantageusement, la modulation du signal lumineux pour transmettre des données numériques supplémentaires ne perturbe pas la fonction initiale de l'indicateur lumineux du produit industriel.

Par exemple, les données numériques D comportent une information supplémentaire relative au produit industriel, par exemple un identifiant unique du produit, une adresse IP (Internet Protocol) ou un URL (acronyme de « Uniform Resource Locator » ou adresse web), une clé ou un code, l'état des registres, un mot de passe de couplage BLE (acronyme de « Bluetooth Low Energy ») ou des clés dynamiques pour la mise en service de Zigbee. Plus généralement, les données numériques D comportent des informations de mise en service ou pairing (appairage) de communication sans fils, mesures réalisées par le produit, l'état du produit. Cela permet par exemple de faciliter l'installation et la mise en service, ou la maintenance d'un produit par un utilisateur. Cela permet également d'améliorer la cybersécurité d'un produit.

Le signal lumineux modulé est émis par la source lumineuse 8.

Le dispositif récepteur 6, également appelé simplement récepteur, comporte un capteur d'images 20, par exemple une caméra optique à capteurs CMOS (pour *« Complementary metat-oxide-semiconductor*»)*,* adaptée pour capter des signaux lumineux sous forme d'image numérique, une image numérique étant composée d'une ou plusieurs matrices de pixels, chaque pixel d'une matrice de pixels ayant une valeur numérique associée.

De préférence, le capteur d'images 20 est un capteur à obturateur déroulant (en anglais « rolling-shutter »).

Le capteur d'images 20 est configuré pour acquérir des images formées par le signal lumineux émis par la source lumineuse 8.

En fonction de paramètres de calibration du capteur d'images 20, notamment de la sensibilité (exprimée en ISO ou en gain en dB), de la durée d'exposition et de la durée d'acquisition d'une image (ou trame), les images numériques acquises comportent des valeurs représentatives de l'état haut ou bas, ou d'une transition entre ces états dans une zone d'image éclairée par la source lumineuse. Ainsi, une image numérique acquise comporte une zone comportant des franges claires et sombres, correspondant respectivement aux états haut et bas du signal lumineux.

L'image numérique acquise est transmise à un dispositif 22 de démodulation, et le résultat du dispositif 22 de démodulation est transmis à un module 23 de décodage pour obtenir en sortie un ensemble de données numériques décodées D*.

En l'absence de perte ou d'erreur, les données numériques décodées D* sont identiques aux données numériques D.

Dans un mode de réalisation, le dispositif de démodulation 22 et le module de décodage 23 sont mis en oeuvre par un processeur de calcul 25.

En variante, chacun des dispositifs de démodulation 22 et de décodage 23 est un module dédié réalisé sous forme d'un composant logique programmable tel qu'un FPGA (de l'anglais *Field Programmable Gate Array*)*,* ou encore sous forme d'un circuit intégré dédié, tel qu'un ASIC (de l'anglais *Application Spécifie Integrated Circuit*).

Dans un mode de réalisation, le dispositif récepteur 6 est appareil électronique portable, tel qu'un téléphone portable ou smartphone, une tablette électronique, un ordinateur portable, ou tout autre appareil électronique portable équipé d'une caméra et d'un dispositif électronique de calcul.

Lorsque le dispositif récepteur 6 est placé par un utilisateur de manière à ce que le capteur d'images 20 du dispositif récepteur soit placé sensiblement en vis-à-vis de la source lumineuse 8, à une distance de la source lumineuse 8 choisie par l'utilisateur et par exemple comprise entre 0cm (i.e. collé) à 6cm, et que le dispositif récepteur 6 est mis dans un mode de réception VLC, la ou chaque image captée comprend, dans une zone éclairée par le signal lumineux émis par la source lumineuse, des franges, disposées verticalement, représentatives des états haut ou bas du signal émis.

Ainsi, une transmission sans fil de données est effectuée entre l'émetteur 4 et le récepteur 6, en utilisant une communication VLC.

Le dispositif de démodulation 22 est un dispositif électronique de calcul mettant en oeuvre le procédé de démodulation de données modulées par modulation d'amplitude d'un signal lumineux émis par la source lumineuse 8 du dispositif émetteur 4.

Dans un mode de réalisation, le dispositif de démodulation 22 comporte :
- un module 24 configuré pour calculer une valeur moyenne par colonne de ladite image numérique, et mémoriser des valeurs moyennes par colonne en association avec un indice de colonne, rangées entre un premier indice de bord correspondant à un premier bord de ladite image et un deuxième indice de bord correspondant à un deuxième bord de ladite image ;
- un module 26 configuré pour déterminer une valeur maximale desdites valeurs moyennes, et calculer un seuil à partir de ladite valeur maximale,
- un module 28 configuré pour déterminer un premier indice de colonne correspondant à la première valeur moyenne supérieure ou égale audit seuil en partant du premier indice de bord, et un deuxième indice de colonne correspondant à la première valeur moyenne supérieure ou égale audit seuil en partant du deuxième indice de bord ;
- un module 30 configuré pour extraire un sous-ensemble de valeurs moyennes entre le premier indice de colonne et le deuxième indice de colonne ;
- un module 32 configuré pour démoduler des données binaires à partir dudit sous-ensemble de valeurs moyennes.

De préférence, les modules 24, 26, 28, 30,32 sont réalisés sous forme d'instructions logicielles formant un programme d'ordinateur qui lorsqu'elles sont exécutées par un processeur de calcul 25, exécutent le procédé de démodulation de données modulées tel que décrit ci-après. Ce code logiciel est mémorisée dans une mémoire électronique du dispositif récepteur 6.

Lorsque le procédé est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

En variante, chacun des modules 24, 26, 28, 30,32 est un module dédié réalisé sous forme d'un composant logique programmable tel qu'un FPGA (de l'anglais *Field Programmable Gate Array*), ou encore sous forme d'un circuit intégré dédié, tel qu'un ASIC (de l'anglais *Application Spécifie Integrated Circuit*)*.*

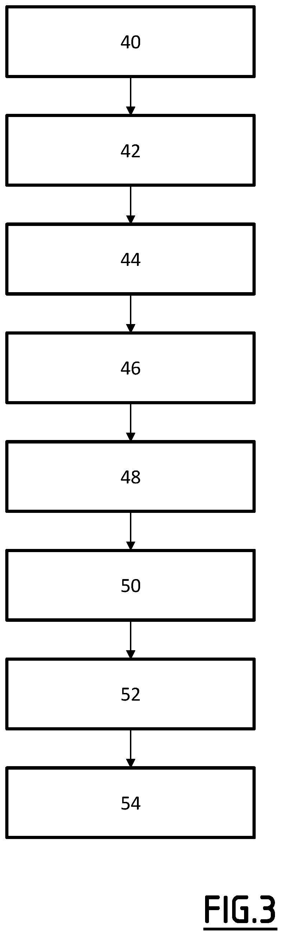

La figure 3 est un synoptique des principales étapes d'un mode de réalisation d'un procédé de démodulation de données modulées par modulation d'amplitude d'un signal lumineux émis par une source lumineuse d'un dispositif émetteur.

Le procédé comprend une étape 40 d'acquisition d'une image numérique, comportant une zone éclairée par la source lumineuse, la zone comportant des franges correspondant à des états haut et bas du signal lumineux, et des franges correspondant à une transition entre ces états.

L'image numérique acquise est une image en niveaux de gris, correspondant à la luminance du signal lumineux. Elle est formée d'une matrice de pixels, chaque pixel ayant une valeur représentative d'un niveau de gris associé. Par exemple chaque pixel prend une valeur codée sur 8 ou 16 bits.

Par exemple, lorsque la luminance est codée sur 256 niveaux de gris, les franges claires correspondent à un état haut du signal lumineux, et les franges sombres correspondent à un état bas du signal lumineux, et les franges grises correspondent aux transitions entre ces états.

Le procédé comprend ensuite une étape 42 de calcul d'une valeur moyenne par colonne de l'image numérique (i.e. calcul de la moyenne des valeurs de luminance par colonne), et de mémorisation des valeurs moyennes calculées en association avec un indice de colonne.

Par exemple, les valeurs moyennes calculées sont mémorisées dans un tableau ou dans une liste ordonnée de valeurs, la liste étant ordonnée en fonction des indices de colonne. Les valeurs moyennes calculées forment un signal S1 en une dimension (ou signal 1D) représentatif des colonnes de l'image numérique.

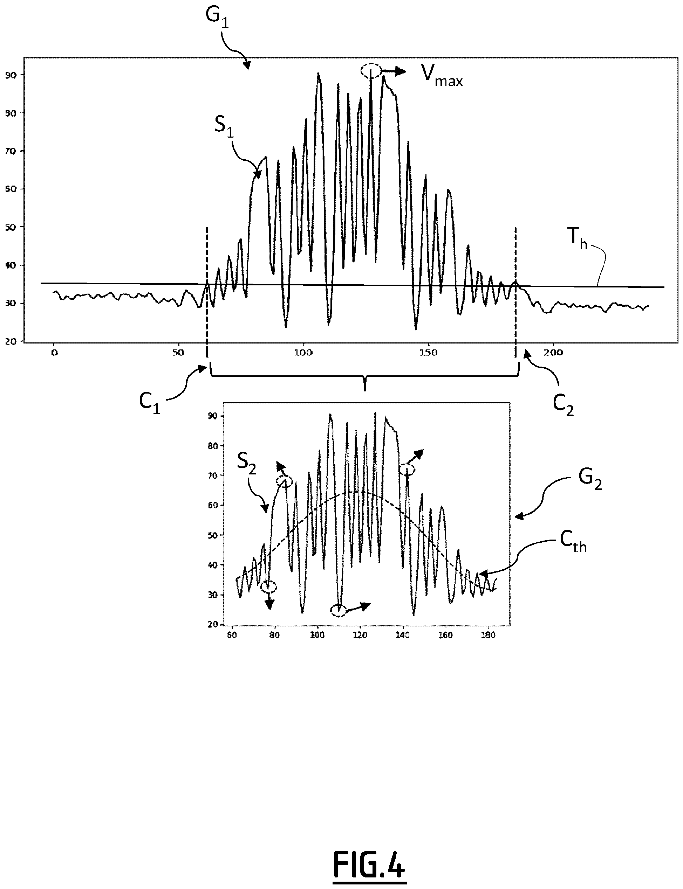

Le signal S1 ainsi formé est illustré dans le graphe G1 de la figure 4, qui représente en abscisse des valeurs d'indices de colonnes et en ordonnées, des valeurs moyennes calculées.

Pour une image numérique comportant N colonnes, les indices de colonne sont des indices entiers compris entre un premier indice de bord, par exemple i=0, correspondant à un premier bord de l'image numérique acquise et un deuxième indice de bord, par exemple i=N-1, correspondant à un deuxième bord de l'image numérique acquise. En d'autres termes, le premier bord est un premier bord vertical de l'image numérique, et le deuxième bord est le deuxième bord vertical, parallèle au premier bord.

Le procédé comporte ensuite une étape 44 de détermination de la valeur maximale Vₘₐₓ des valeurs moyennes calculées et mémorisées, et une étape 46 de calcul d'un seuil Th à partir de la valeur maximale Vₘₐₓ.

De préférence, le seuil Th est égal à un pourcentage de Vₘₐₓ, par exemple 40% de Vₘₐₓ.

Plus généralement, le seuil Th est égal à un pourcentage P% de Vₘₐₓ compris entre 30% et 50%.

Le seuil Th est également mémorisé.

Le procédé comprend ensuite une étape 48 de détermination d'un premier indice de colonne, c₁, correspondant à la première valeur moyenne supérieure ou égale au seuil Th en partant du premier indice de bord et en parcourant les indices de colonne dans le sens croissant, et de détermination d'un deuxième indice de colonne, c₂, correspondant à la première valeur moyenne supérieure ou égale au seuil Th en partant du deuxième indice de bord et en parcourant les indices de colonne dans le sens décroissant.

En d'autres termes, le deuxième indice correspond à la dernière valeur moyenne supérieure ou égale au seuil Th du signal 1D mémorisé, en parcourant les indices dans le sens croissant.

Ainsi, toutes les valeurs des échantillons du signal S1 (signal des valeurs moyennes) comprises entre 0 (premier indice de bord) et c₁-1 et toutes les valeurs du signal S1 comprises entre c₂+1 et N-1 (deuxième indice de bord) sont inférieures au seuil Th.

Un sous-ensemble de valeurs moyennes, formant un sous-signal S2, est alors extrait à l'étape d'extraction 50, le sous-signal S2 étant formé des valeurs moyennes comprises entre le premier indice de colonne c₁ et le deuxième indice de colonne c₂.

Le sous-signal S2 est représenté dans le graphe G2 de la figure 4.

Avantageusement, le sous-signal S2 correspond à la zone effectivement éclairée par la source lumineuse.

Avantageusement, le procédé permet d'adapter dynamiquement la taille du sous-signal S2 sans connaissance préalable de la taille (e.g. du diamètre) de la source lumineuse et de la distance entre le capteur d'images et la source lumineuse. Ainsi, les valeurs parasites, potentiellement bruitées correspondant au fond d'image (non éclairé) sont éliminées automatiquement.

Le procédé comprend ensuite une démodulation de données binaires à partir du sous-ensemble de valeurs moyennes extrait à l'étape 50.

Dans un mode de réalisation, la démodulation est effectuée en deux étapes, respectivement une étape 52 de calcul d'une courbe de seuillage par une méthode de segmentation, et une étape 54 d'extraction de données binaires en appliquant la courbe de seuillage à chaque colonne de l'image numérique.

Dans un mode de réalisation, la méthode de segmentation pour le calcul de la courbe de seuillage est une approximation polynomiale de courbe (en anglais, « polynomial curve fitting »).

La courbe de seuillage calculée Cth est illustrée sur le graphe G2 de la figure 4.

Pour chaque indice de colonne, si la valeur moyenne se situe au-dessus du point correspondant de la courbe de seuillage, une valeur binaire égale à 1 est extraite, et si la valeur moyenne se situe en-dessous du point de la courbe de seuillage, une valeur binaire égale à 0 est extraite.

L'invention a été décrite ci-dessus dans le contexte d'une orientation verticale des franges observées dans l'image numérique. Cette orientation est liée au sens d'observation de l'image numérique captée. Il est clair qu'il est aisé pour un homme du métier de transposer le procédé décrit pour une application pour des images numériques comportant des franges horizontales.

Avantageusement, le procédé permet d'extraire des données binaires à partir d'une zone éclairée de l'image numérique, par adaptation dynamique, et donc le fond d'image, potentiellement bruité, n'est pas utilisé dans l'étape de démodulation. La précision de la démodulation est ainsi augmentée.

Avantageusement, la modulation du signal lumineux pour transmettre des données numériques supplémentaires ne perturbe pas la fonction initiale de l'indicateur lumineux du produit industriel. Ainsi, il est possible d'intégrer la fonctionnalité proposée sans nécessiter de modifications structurelles importantes de produits existants, ce qui permet de limiter les coûts.

## Revendications

1. Procédé de démodulation de données modulées par modulation d'amplitude d'un signal lumineux émis par une source lumineuse (8) d'un dispositif émetteur, le procédé étant comportant une acquisition (40) d'une image numérique comportant une zone éclairée par ledit signal lumineux, ladite zone comportant des franges correspondant à des états haut et bas du signal lumineux, le procédé étant **caractérisé en ce qu'**il comporte en outre des étapes de :
- calcul (42) d'une valeur moyenne par colonne de ladite image numérique, et mémorisation des valeurs moyennes par colonne en association avec un indice de colonne, rangées entre un premier indice de bord correspondant à un premier bord de ladite image et un deuxième indice de bord correspondant à un deuxième bord de ladite image ;
- détermination (44) d'une valeur maximale (Vₘₐₓ) desdites valeurs moyennes, et calcul (46) d'un seuil à partir de ladite valeur maximale,
- détermination (48) d'un premier indice de colonne (c₁) correspondant à la première valeur moyenne supérieure ou égale audit seuil en partant du premier indice de bord, et d'un deuxième indice de colonne (c₂) correspondant à la première valeur moyenne supérieure ou égale audit seuil en partant du deuxième indice de bord ;
- extraction (50) d'un sous-ensemble de valeurs moyennes entre le premier indice de colonne et le deuxième indice de colonne ;
- démodulation (52, 54) de données binaires à partir dudit sous-ensemble de valeurs moyennes.

2. Procédé selon la revendication 1, dans lequel ledit seuil est un pourcentage de ladite valeur maximale, de préférence compris entre 30% et 50%.

3. Procédé selon la revendication 2, dans lequel ledit seuil est égal à 40% de ladite valeur maximale.

4. Procédé selon l'une quelconque des revendications 1 à 3, dans lequel dans l'étape de mémorisation (42), les valeurs moyennes par colonne sont mémorisées dans un tableau ou dans une liste ordonnée en fonction des indices de colonne.

5. Procédé selon l'une quelconque des revendications 1 à 4, dans lequel l'étape de démodulation de données binaires comporte un calcul d'une courbe de seuillage par une méthode de segmentation.

6. Dispositif de démodulation de données modulées par modulation d'amplitude d'un signal lumineux émis par une source lumineuse d'un dispositif émetteur, le dispositif de démodulation étant configuré pour acquérir une image numérique comportant une zone éclairée par ledit signal lumineux, ladite zone comportant des franges correspondant à des états haut et bas du signal lumineux, le dispositif étant **caractérisé en ce qu'**il comporte en outre des modules configurés pour :
- calculer (24) une valeur moyenne par colonne de ladite image numérique, et mémoriser des valeurs moyennes par colonne en association avec un indice de colonne, rangées entre un premier indice de bord correspondant à un premier bord de ladite image et un deuxième indice de bord correspondant à un deuxième bord de ladite image ;
- déterminer (26) une valeur maximale desdites valeurs moyennes, et calculer un seuil à partir de ladite valeur maximale,
- déterminer (28) un premier indice de colonne correspondant à la première valeur moyenne supérieure ou égale audit seuil en partant du premier indice de bord, et un deuxième indice de colonne correspondant à la première valeur moyenne supérieure ou égale audit seuil en partant du deuxième indice de bord ;
- extraire (30) un sous-ensemble de valeurs moyennes entre le premier indice de colonne et le deuxième indice de colonne ;
- démoduler (32) des données binaires à partir dudit sous-ensemble de valeurs moyennes.

7. Dispositif de démodulation selon la revendication 6, dans lequel ledit seuil est un pourcentage de ladite valeur maximale, de préférence compris entre 30% et 50%.

8. Appareil électronique comportant un capteur d'images et un dispositif de démodulation de données modulées par modulation d'amplitude d'un signal lumineux conforme aux revendications 6 et 7.

9. Appareil électronique selon la revendication 8, ledit appareil électronique étant un téléphone mobile ou une tablette électronique avec au moins un l'appareil de capture d'image CMOS intégré.
